Europäisches Patentamt

**European Patent Office**

**Office européen des brevets**

(19)

(11) Numéro de publication: **0 030 905**
**B1**

(12) **FASCICULE DE BREVET EUROPEEN**

(45) Date de publication du fascicule du brevet: **11.07.84**

(21) Numéro de dépôt: **80420141.6**

(22) Date de dépôt: **11.12.80**

(51) Int. Cl.³: **B 01 D 31/00,**
B 01 D 13/00, B 01 D 25/14

(54) **Dispositif pour la fixation étanche de membranes semi-perméables sur chaque plaque-support d'un appareil séparateur.**

(30) Priorité: **13.12.79 FR 7931187**

(43) Date de publication de la demande:
**24.06.81 Bulletin 81/25**

(45) Mention de la délivrance du brevet:
**11.07.84 Bulletin 84/28**

(84) Etats contractants désignés:
**BE DE GB IT NL**

(56) Documents cités:
DE - A - 1 960 820
DE - A - 2 344 632
DE - B - 1 039 493
FR - A - 2 124 369
FR - A - 2 182 721
FR - A - 2 392 696
US - A - 1 649 822

(73) Titulaire: **RHONE-POULENC SPECIALITES CHIMIQUES**
**"Les Miroirs" 18, Avenue d'Alsace**
**F-92400 Courbevoie (FR)**

(72) Inventeur: **Foucras, Jacques**
**294, route de Genas**
**F-69500 Bron (FR)**
Inventeur: **Rodet, Georges**
**Montée du Télégraphe**
**F-69960 Communay (FR)**

(74) Mandataire: **Vogt, Bernard et al,**
**RHONE-POULENC RECHERCHES Service Brevets Chimie et Polymères Centre de Recherches de Saint-Fons B.P. 62**
**F-69192 St-Fons Cédex (FR)**

Courier Press, Leamington Spa, England.

## Description

La présente invention se rapporte à un dispositif pour la fixation étanche de membranes semi-perméables sur les plaques-supports d'un appareil séparateur par perméabilité sélective.

Des appareils séparateurs de fluide par perméabilité sélective sont connus notamment par le brevet français 2 127 155 et son certificat d'addition 2 141 417. Ces appareils comprennent des sous-ensembles constitués notamment par la juxtaposition d'un certain nombre de plaques-supports de membranes, le fluide sous pression à traiter, généralement liquide, circulant en parallèle entre les membranes de plaques-supports successives (d'un sous-ensemble) qui comprennent des orifices généralement allongés de passage dudit fluide vers chacune de leurs extrémités, tandis que ce fluide circule en série d'un sou-ensemble à l'autre grâce à la présence de plaques dites intermédiaires n'ayant un orifice que vers une de leurs extrémités. Le fluide ayant traversé les membranes est récupéré pour chaque plaque-support de façon individuelle sur la tranche de cette dernière grâce à au moins une tubulure prévue à cet effet.

Pour le maintien étanche des membranes à proximité des orifices de passage du fluide à traiter de chaque plaque-support, une solution a été proposée par le dispositif selon le brevet français 2 165 042. Cette solution consiste à maintenir la membrane à ses extrémités transversales dans une ouverture allongée proche de l'orifice de passage du fluide à traiter, grâce à un dispositif amovible maintenant la membrane de manière étanche sur la paroi interne de cette ouverture. Or il s'est avéré que ce dispositif amovible pouvait, dans certaines conditions d'utilisation de l'appareil, notamment pour de fortes vitesses de circulation du fluide à traiter, être avantageusement remplacé par un dispositif de préférence de forme circulaire au centre duquel circule ledit fluide à traiter.

Un dispositif de forme circulaire pour la fixation étanche de membranes sur un plaque-support est déjà connu, mais il présente l'inconvénient de ne pas être fixé lui-même sur la plaque-support, ce qui nécessite que les dispositifs adjacents de deux plaques-supports consécutives soient en contact entre eux par exemple grâce à des câmes ou des surépaisseurs périphériques qui font que les membranes ne sont maintenues de manière étanche sur les plaques-supports qu'au moment du serrage de l'appareil. Ce mode de réalisation du dispositif de fixation de membranes ne permet donc d'assurer la fixation étanche des membranes sur chaque face opposée et autour de l'orifice de passage du fluide à traiter d'une plaque-support, qu'au moment du serrage de l'appareil lui-même. Ce mode de réalisation des dispositifs de fixation présente ainsi comme inconvénient le fait de rendre l'étanchéïté des membranes sur chaque plaque-support tributaire du serrage de l'appareil lui-même serrage qui doit également permettre d'assurer l'étanchéïté périphérique entre deux plaques-supports de membranes consécutives.

Un dispositif ne présentant pas les inconvénients du dispositif ci-avant a été dans la demande de brevet français publiée sous le numéro 2 392 696. Ce dispositif est constitué par deux bagues fixées l'une à l'autre après qu'elles aient été disposées par rapprochement axial dans l'orifice de passage du fluide à traiter d'une plaque-support. Ces bagues sont généralement en matériau macromoléculaire rigide et avantageusement en matière injectée. Cependant il peut être avantageux parfois de réaliser un dispositif en un matériau ayant une meilleure tenue à certains agents chimiques ou à la température.

Un but de la présente invention est donc un dispositif ne présentant pas les inconvénients des dispositifs de l'art antérieur et ayant des propriétés améliorées, notamment en ce qui concerne sa tenue aux agents chimiques et à la température.

Il a maintenant été trouvé, et c'est ce qui fait l'objet de la présente invention, un dispositif pour la fixation étanche de membranes semi-perméables sur chaque face opposée et autour de chaque orifice de passage du fluide à traiter d'une plaque-support de membranes d'un appareil séparateur par perméabilité sélective, ledit dispositif comprenant deux bagues, mâle et femelle ayant respectivement un rebord et une partie cylindrique, lesdits rebords pressant les membranes sur la plaque support considérée, caractérisé en ce que les deux bagues métalliques et embouties sont fixées l'une à l'autre de manière étanche par rabettement sur un joint de l'extrémité de la partie cylindrique de la bague mâle lors du montage du dispositif sur une plaque-support.

La description du dispositif selon la présente invention sera mieux comprise à l'aide des figures ci-jointes qui illustrent de façon schématique, à titre d'exemples non limitatifs et sans échelle déterminée, des modes de réalisation particuliers dudit dispositif.

La figure 1 représente une plaque-support de membranes que le dispositif selon la présente invention est susceptible d'équiper.

La figure 2 est une coupe brisée partielle de la plaque-support selon la figure 1.

La figure 3 est une vue en coupe d'un dispositif selon la présente invention, en position sur une plaque-support vue en coupe selon III—III de la figure 1.

La figure 3a est une coupe axiale de la bague femelle de la figure 3 avant son montage la plaque-support.

La figure 3b est une coupe axiale de la bague mâle de la figure 3 avant son montage la plaque-support.

La figure 4 représente en coupe un mode de montage du dispositif selon la figure 3 sur une plaque-support.

Les figures 5 et 6 illustrent des variantes de réalisation du dispositif selon la présente invention, en coupe partielle.

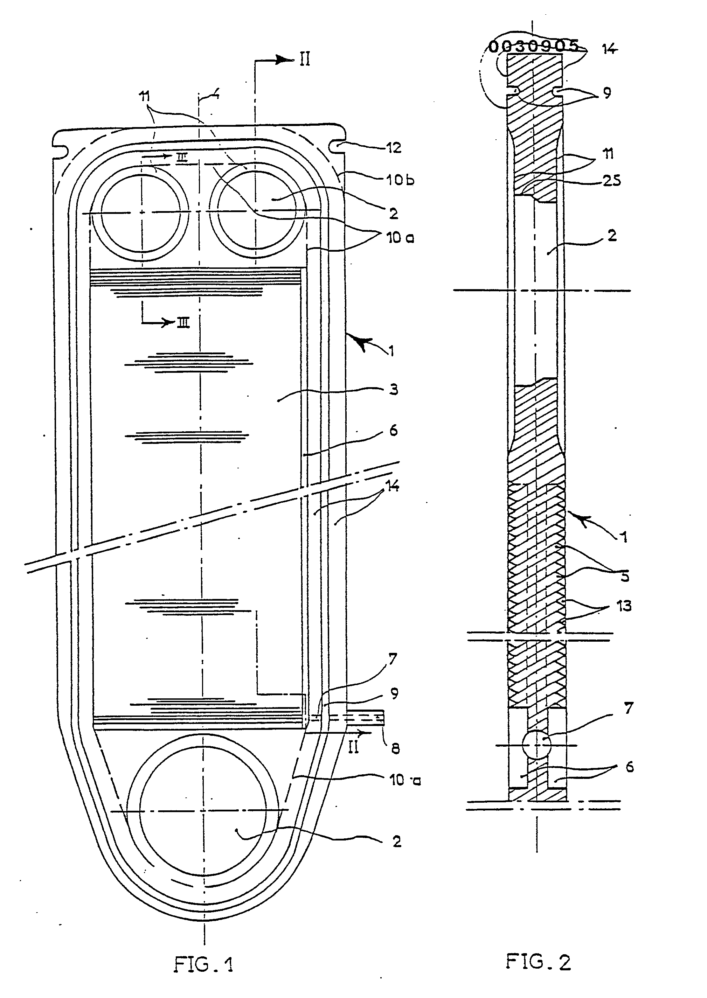

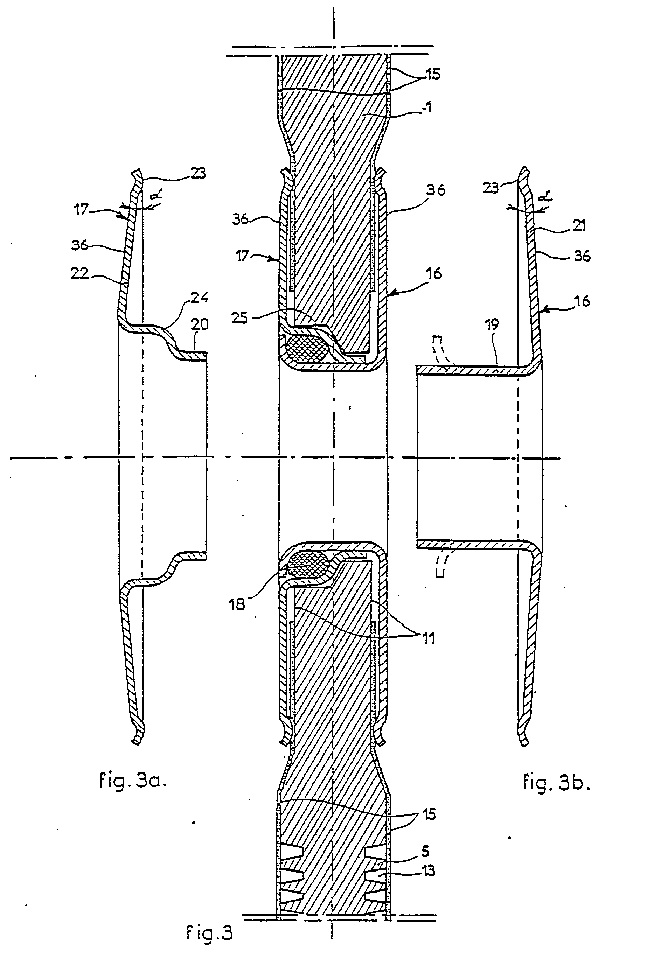

Une plaque-support sur laquelle le dispositif selon la présente invention est susceptible de fixer les membranes de manière étanche est en partie représentée figures 1 et 2 à titre d'exemple. Une telle plaque (1), généralement de forme allongée, comprend vers chacune de ses extrémités au moins un orifice (2) de passage du fluide à traiter. Dans le cas de la figure 1, la plaque (1) comprend deux orifices (2) dans sa partie haute, tandis qu'elle n'en comprend qu'un dans sa partie basse. Bien entendu les plaques-supports que les dispositifs, selon la présente invention, sont susceptibles d'équiper, peuvent avoir le même nombre d'orifices (2) à chaque extrémité. Entre les orifices (2) de chaque extrémité de la plaque et sur chaque face de cette dernière se trouve une cuvette (3), ou zone, comprenant des nervures (5) perpendiculaires à l'axe longitudinal (4) de la plaque-support (1). Ces nervures (5) peuvent avoir une section triangulaire comme représentée schématiquement sur la figure 2. Cependant ces nervures (5) sont avantageusement de section trapézoïdale, comme cela est représenté de manière agrandie figure 3. Eventuellement ces nervures (5) peuvent comprendre des moyens d'ancrage, par exemple des crêtes, comme cela est décrit dans la demande de brevet français publiée sous le numéro 2 400 380. Les nervures (5) de chaque cuvette (3) sont recouvertes par une membrane et le fluide qui a traversé les membranes, généralement liquide, circule dans les rainures (13) formées entre les nervures (5) successives. Ce fluide est collecté dans chaque cuvette (3) grâce à au moins une rainure longitudinale (6) en communication avec chaque rainure (13), chaque rainure longitudinale (6) étant également avantageusement en communication avec un passage (7) interne à la plaque (1) et permettant l'évacuation dudit fluide à l'extérieur de la plaque (1), par exemple grâce à une tubulure (8).

Deux plaques-supports (1) consécutives, dans un appareil, sont de préférence maintenues écartées entre elles grâce à un joint plat assurant l'étanchéité périphérique entre les deux plaques (1) et définissant l'épaisseur de la lame du fluide à traiter sous pression circulant entre les membranes de deux plaques-supports consécutives (1). La plaque-support (1) représentée figures 1 et 2 comprend sur le bord (14) de chacune de ses faces une gorge périphérique (9), éventuellement discontinue, dans laquelle se positionne une surépaisseur correspondante du joint plat séparant deux plaques-supports; ceci assure un meilleur positionnement et une meilleure tenue du joint plat à l'action du fluide à traiter circulant sous pression entre les membranes de deux plaques-supports consécutives. Un joint plat n'est pas représenté figure 1, mais les lignes brisées 10a et 10b montrent son positionnement sur la plaque-support (1), un joint ayant ainsi son contour externe sensiblement de mêmes dimensions que celles du contour de la plaque-support (ligne 10b), tandis que son contour interne (ligne 10a) correspond sensiblement à la largeur de la cuvette (3) et passe à proximité des orifices (2). Sur une plaque-support (1), chaque membrane (non représentée) a un contour correspondant sensiblement à celui de la gorge périphérique (9) et des ouvertures correspondant aux orifices (2) de passage du fluide à traiter. Généralement les membranes ont une découpe telle qu'à proximité des orifices (2) elles reposent sur un évasement périphérique (11) avantageusement prévu sur chaque face d'une plaque-support (1). Les encoches (12) prévues dans la partie haute de la plaque-support (1) correspondent à des moyens pour le maintien desdites plaques-supports (1) qui sont généralement utilisées en position verticale dans un appareil, la tubulure (8) d'évacuation du fluide ayant traversé les membranes étant alors avantageusement placée vers la partie inférieure de chaque plaque-support.

La plaque-support (1) décrite ci-avant, à titre d'exemple, correspond à un mode de réalisation préférentiel d'une telle plaque que le dispositif selon la présente invention (décrit ci-après) est susceptible d'équiper. Une telle plaque-support (1) peut par exemple être en matière plastique et obtenue par injection sous pression. Il doit être entendu cependant que les plaques-supports que le dispositif selon la présente invention est susceptible d'équiper peuvent être des plaques usinées et qu'elles peuvent présenter de nombreuses variantes structurelles par rapport à la plaque ci-avant décrite à titre d'exemple.

De façon générale, le dispositif selon la présente invention présente un intérêt certain chaque fois qu'il est question de fixer de manière étanche une membrane sur chaque face d'une plaque et que cette dernière présente au moins un orifice la traversant pour le passage d'un fluide qui ne doit pas circuler entre les membranes de la plaque considérée. Bien que chaque orifice (2) de cette plaque soit de préférence de section circulaire, comme cela est représenté figure 1, il se peut cependant que ces orifices (2) soient elliptiques ou éventuellement de sections carrée ou rectangulaire avec des angles arrondis. Le dispositif selon la présente invention, décrit en détails ci-après pour des plaques ayant des orifices (2) de section circulaire, est bien entendu adapté à la forme de chaque orifice (2) d'une plaque-support.

La figure 3 représente un mode de réalisation préférentiel d'un dispositif selon la présente invention pour la fixation étanche de membranes (15) semi-perméables sur chaque face d'une plaque-support (1) telle que précédemment décrite. Ce dispositif comprend une bague mâle (16) et une bague femelle (17), emboîtées l'une dans l'autre dans un orifice (2) de passage du fluide à traiter de la plaque considérée, et fixées entre elles de manière étanche par l'intermédiaire d'un joint (18). La figure 3a représente la bague femelle (17) et la figure 3b la bague mâle (16) avant leur fixation dans l'orifice (2) de la plaque-support. Ces deux bagues (16 et 17) sont en matériau métallique embouti, généralement sous forme d'alliage, de préférence en acier inoxydable, et elles ont sensiblement partout la même épaisseur. Elles comportent toutes deux une partie cylindrique (19) et (20) et un rebord ou collet (21, 22) dont le pourtour circulaire se termine par une nervure (23) interne comme cela est représenté figure 3 (a et b). Ces nervures (23) appliquent de manière étanche les membranes (15) contre la plaque-support lorsque le dispositif est fixé sur la plaque. Avantageusement les rebords (22 et 21), avant le montage des bagues (16 et 17) sur une plaque-support, forment un angle $\alpha$ compris entre 2 et 8°, de préférence entre 3 et 6°, par rapport à la face de la plaque-support contre laquelle elles doivent presser une membrane. De préférence l'angle $\alpha$ est déterminé de façon à ce que, après montage des bagues sur une plaque-support, les nervures (23) appuyent sur les membranes tandis que les rebords (21 et 22) sont déformés dans la zone de déformation élastique du matériau métallique utilisé et de façon à ce qu'après un éventuel démontage du dispositif les bagues conservent l'angle $\alpha$ initial. La bague femelle (17) comprend une partie cyclindrique (24) de plus grand diamètre, appelée encoche (24), dans laquelle se trouve un joint (18) torique. Cette partie cylindrique (24) est directement raccordée au collet (22) de ladite bague (17). L'orifice (2) de la plaque-support (1) comprend une partie cylindrique (25) ou encoche (25) de plus grand diamètre, correspondant à l'encoche (24) de la bague femelle (17). Cette encoche (25) de l'orifice (2) de la plaque-support est directement raccordée à l'évasement périphérique (11) de ladite plaque. Le diamètre externe de la partie cylindrique (20) de la bague femelle (17) est sensiblement de même dimension que celui de l'orifice (2) de la plaque-support, tandis que le diamètre interne de la partie cylindrique (20) de la bague femelle est sensiblement le même que le diamètre externe de la partie cylindrique (19) de la bague mâle (16). La longuer de la partie cylindrique (19) de la bague mâle (16) est d'autre part telle qu'après sa fixation sur le joint (18), sa partie rabattue soit sensiblement dans le même plan que celui du rebord (22) de la bague femelle (17). D'autre part l'évasement périphérique (11) de la plaque-support est tel qu'après montage du dispositif, la face externe (36) du rebord (21 et 22) de chaque bague (16 et 17) soit sensiblement dans le même plan que celui de la membrane sur chaque cuvette (3) de la plaque.

Bien que le dispositif selon la présente invention ait été représenté figure 3 avec un joint torique (quelque peu déformé après la fixation du dispositif), il se peut cependant que ce joint soit de tout autre section, notamment par exemple de section rectangulaire ou carrée. Ces joints (18) sont généralement en caoutchouc nitrile, éthylène-propylène, butyle, butadiène-styrène, chloroprène, fluocarbone, silicone, fluorosilicone, polyacrylique, polyuréthane.

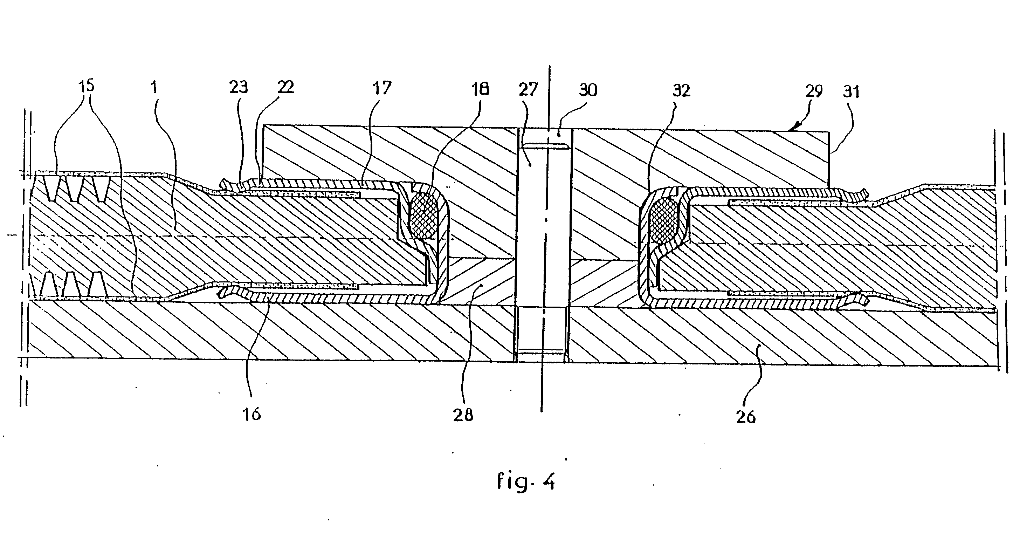

Pour le montage du dispositif de fixation étanche de membranes sur un plaque-support tel que celui représenté figure 3, il est avantageux de procéder de la façon suivante. On prend tout d'abord (voir figure 4) un support (26) plan dont le contour correspond sensiblement à celui de la plaque-support (1). Ce support plan (26) comprend à chaque endroit correspondant à un orifice (2) de la plaque-support (1) un cylindre (27) de centrage solidaire du support (26) et dont l'axe longidutinal correspond à l'axe de l'orifice (2) de la plaque-support (1). Autour de ce cylindre se trouve une pièce annulaire (28) dont le diamètre interne correspond à celui du cylindre (27) et dont le diamètre externe correspond au diamètre interne de la bague mâle (16). La partie de la pièce annulaire (28) au contact du support (26) se termine avantageusement par un arrondi dont le rayon correspond au rayon de raccordement entre la partie cylindrique (19) et le rebord (21) de la bague mâle (16). Il doit être signalé qu'éventuellement la pièce annulaire (28) et le cylindre (27) peuvent être en une seule pièce. Sur le support (26) décrit ci-avant, disposé horizontalement, on place ensuite successivement, à chaque endroit où se trouve un orifice (2) de la plaque-support: une bague mâle (16) autour de la pièce annulaire (28), une membrane (15) préalablement découpée, la plaque-support (1), une membrane (15), la bague femelle (17) et le joint (18). On dispose ensuite autour du cylindre (27) de centrage une pièce (29) dite de verrouillage comportant un alésage (30) dont le diamètre correspond à celui dudit cylindre (27). Cette pièce (29), qui permet de verrouiller la bague mâle (16) par l'intermédiaire du joint (18), avec la bague femelle (17), tout en comprimant ledit joint (18), comprend deux parties cylindriques; l'une a un diamètre (31) légèrement plus faible que le pourtour de la nervure (23) du rebord (22) de la bague femelle (17), l'autre a un diamètre qui correspond au diamètre interne de la partie cylindrique (19) de la bague mâle (16). Le raccordement de ces deux parties cylindriques de la pièce de verrouillage (29) se fait par un arrondi (32) qui permet de rabattre, à la forme souhaitée, l'extrémité de la partie cylindrique (19) de la bague mâle (16) sur le joint (18) lorsque la pièce (29) de verrouillage et la pièce annulaire (28) viennent en butée. Ainsi la mise en place de chaque dispositif selon la présente invention sur une plaque-support (1) se fait avec un appareillage simple permettant d'obtenir un écartement constant entre le rebord (22) de la bague femelle (17) et le rebord (21) de la bague mâle (16). Le rapprochement des pièces (29) et (28) a lieu tandis que ces éléments sont disposés entre les plateaux d'une presse. Avantageusement tous les dispositifs de fixation étanche des membranes d'une même plaque-support (1) sont mis en place simultanément.

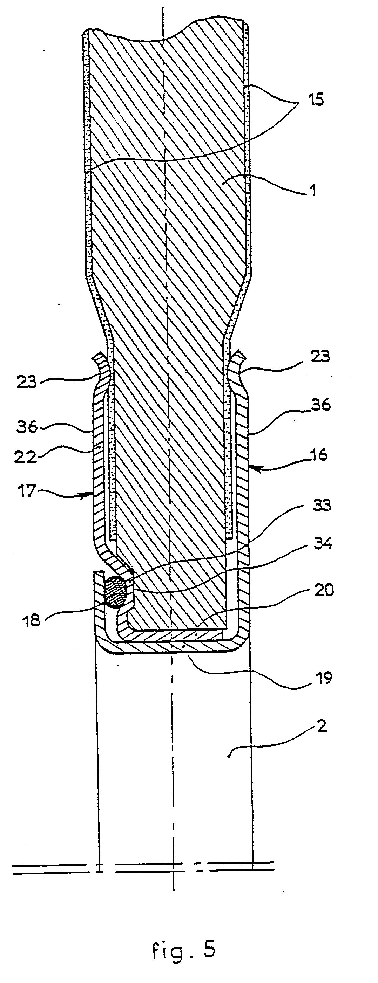

La figure 5 représente une variante de réalisation du dispositif selon la présente invention, pour la fixation étanche de membranes sur une plaque-support. Pour simplifier le dessin, seule une demi-partie du dispositif a été représentée, mais il est bien évident que l'autre partie, non représentée, est symétrique par rapport à l'axe longitudinal de l'orifice (2) de la plaque-support (1) considérée. Dans le dispositif représenté figure 5, le joint (18) ne se trouve pas dans une encoche (24) de la partie cylindrique (20) de la bague femelle (17) comme c'est le cas pour le dispositif selon la figure 3, mais se trouve sur le rebord (22) de la bague femelle (17), de préférence dans une rainure (33) prévue sur son rebord (22). Lors du montage de ce dispositif sur une plaque-support, l'extrémité de la partie cylindrique (19) de la bague mâle (16) est ainsi rabattue au contact du joint (18) sur le rebord (22) de la bague femelle (17). Avantageusement, entre sa partie cylindrique (20) et la rainure (33), le rebord (22) de la bague femelle (17) est conçu de façon telle qu'après son rabattement sur le joint (18), l'extrémité de la bague mâle (16) soit sensiblement dans le même plan que le rebord (22) de la bague femelle (17) au delà de ladite rainure (33). De préférence l'évasement périphérique (11) de la plaque-support (1) du côté de laquelle se trouve la bague femelle (17) comprend une rainure circulaire (34) pour le positionnement de la rainure (33) de ladite bague femelle (17).

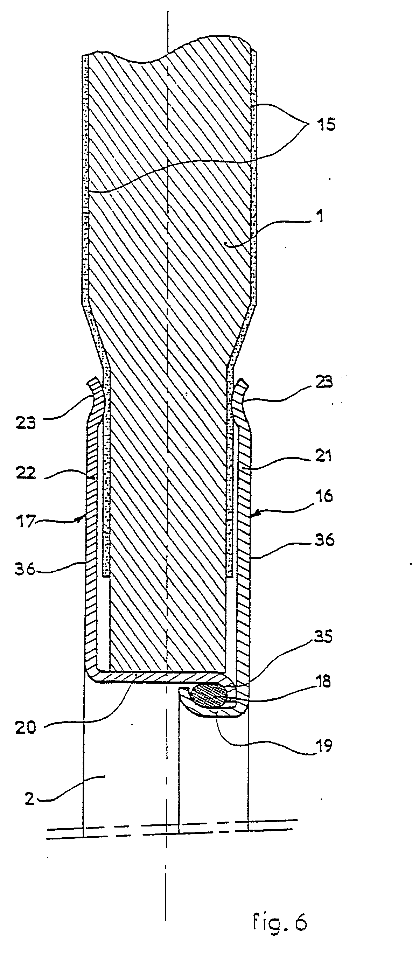

La figure 6 représente un autre mode réalisation d'un dispositif selon la présente invention. Dans ce dispositif la bague mâle (16) a une partie cylindrique (19) dont la longueur ne correspond pas à toute l'épaisseur de la plaque-support (1) au niveau des évasements périphériques (11) d'un orifice, contrairement aux dispositifs décrits précédemment. La bague femelle (17) comprend une partie cylindrique (20) dont la longueur correspond à toute l'épaisseur de la plaque-support (1) au niveau des évasements (11) et dont l'extrémité comprend und partie (35) de préférence arrondie dirigée vers l'intérieur de la partie cylindrique (20) de ladite bague. Le joint (18) est ainsi serré de manière étanche entre l'extrémité (35) arrondie de la partie cylindrique (20) de la bague femelle (17) et l'extrémité rabattue de la partie cylindrique (19) de la bague mâle (16).

### Exemple

Un dispositif conforme à celui de la figure 3 est réalisé en acier inoxydable (Z 10 CN 18/08 — référence AFNOR). L'épaisseur des bagues embouties mâle (16) et femelle (17) est de 0,5 mm. Le diamètre interne de la partie·cylindrique (20) de la bague femelle (17) et le diamètre externe de la partie cylindrique de la bague mâle (16) sont de 67 mm. Les rebords (21 et 22) de chaque bague ont un diamètre périphérique de 89 mm. L'angle $\alpha$ de chaque bague est de 4 degrés. La longuer de la partie cylindrique (19) de la bague mâle (16) est de 6,6 mm avant son montage sur la plaque-support. Une fois verrouillées entre elles sur une plaque-support (1) par l'intermédiaire du joint torique (18) [dont le diamètre interne est de 66,4 mm et dont la section a pour diamètre 1,8 mm], les faces externes (36) des rebords (21 et 22) des bagues (16 et 17) sont distantes de 5,6 mm. Le rayon de courbure interne de raccordement des rebords (21, 22) de chaque bague avec la partie cylindrique adjacente (19, 24) est de 1 mm. Le joint torique (18) utilisé est en caoutchouc nitrile de DIDC = 70 (DIDC = degré international duret caoutchouc) selon norme AFNOR NF T46—003, méthode standard.

Avec un tel dispositif, pour la fixation de membranes, montée sur un plaque-support (1), aucune fuite n'a pu être décelée sous une pression de 6 bars d'air.

### Revendications

1. Dispositif pour la fixation étanche de membranes semi-perméables sur chaque face opposée et autour de chaque orifice (2) de passage du fluide à traiter d'une plaque-support de membranes d'un appareil séparateur par perméabilité sélective, ledit dispositif comprenant deux bagues, mâle (16) et femelle (17) ayant respectivement un rebord (21, 22) et une partie cylindrique (19, 20), lesdits rebords (21, 22) pressant les membranes 15 sur la plaque support considérée, caractérisé en ce que les deux bagues (16 et 17) métalliques et embouties sont fixées l'une à l'autre de manière étanche par rabattement sur un joint (18) de l'extrémité de la partie cylindrique (19) de la bague mâle (16) lors du montage du dispositif sur une plaque-support.

2. Dispositif selon la revendication 1, caractérisé en ce que la bague femelle (17) comprend une partie cylindrique (24) de plus grand diamètre directement raccordée au rebord (22) et positionnée dans une encoche (25) correspondante de la plaque-support (1), le joint (18) se trouvant dans cette partie (24).

3. Dispositif selon la revendication 1, caractérisé en ce que la bague femelle (17) comprend une rainure (33) sur son rebord (22) et en ce que le joint se trouve dans cette rainure (33).

4. Dispositif selon l'une quelconque des revendications 1 à 3, caractérisé en ce qu'après rabattement de l'extremité cylindrique (19) de la bâgue mâle (16), cette extrémité se trouve sensiblement dans la même plan que celui du rebord (22) de la bague femelle (17).

5. Dispositif selon la revendication 1, caractérisé en ce que la bague femelle (17) a une parite cylindrique (20) dont la longueur correspond sensiblement à l'épaisseur de la plaque-support à proximité de l'orifice (2), et dont l'extrémité comprend une partie (35) de préférence arrondie dirigée vers l'intérieur de ladite partie cylindrique (20), le joint (18) étant plaqué contre cette partie (35) après le rabattement le l'extrémité de la partie cylindrique (19) de la bague mâle (16).

6. Dispositif selon l'une quelconque des revendications précédentes, caractérisé en ce que les rebords (21 et 22) de chaque bague (16 et 17) font un angle $\alpha$ avec l'axe de la bague considérés, de manière que lors du montage du dispositif dans l'orifice (2) d'une plaque-support, les rebords (21 et 22), en pressant les membranes contre la plaque-support, se déforment dans les limites élastiques du matériau métallique utilisé pour réaliser les bagues (16 et 17).

7. Dispositif selon la revendication 6, caractérisé en ce que les bagues (16 et 17) sont en acier inoxydable et en ce que l'angle $\alpha$ est compris entre 3 et 6 degrés.

## Patentansprüche

1. Vorrichtung zur dichten Fixierung von semi-permeablen Membranen auf jeder Fläche gegenüberliegend und um jede Öffnung (2) des Durchgangs des zu behandelnden Fluids einer Membranentrageplatte einer Trennvorrichtung durch selektive Permeabilität, wobei diese Vorrichtung zwei Hülsenringe, Steckteile (männlich) (16) und Aufnahmeteile (weiblich) (17) mit jeweils einem Dichtrand (21, 22) und zylindrischen Teil (19, 20) umfaßt, wobei dies Dichtränder (21, 22) die Membranen (15) aufdie vorgesehene Trageplatte pressen, dadurch gekennzeichnet, daß die beiden metallischen und tiefgezogenen Hülsen (16 und 17) eine auf der anderen dicht fixiert sind durch Absenken der Enden des zylindrischen Teils (19) des Steckteils (16) auf eine Dichtung (18) während des Anbringens der Vorrichung auf eine Trägerplatte.

2. Vorrichtung gemäß Anspruch 1, dadurch gekennzeichnet, daß der weibliche Hüslenteil (17) einen zylindrischen Teil (24) von größeren Durchmesser, der direkt an den Dichtrand (22) anschließt und in einer Kerbe (25), entsprechend der Trägerplatte (1) gelagert ist, wobei sich die Dichtung (8) in diesem Teil (24) befindet.

3. Vorrichtung gemäß Anspruch 1, dadurch gekennzeichnet, daß der weibliche Ringaufnahmeteil (17) eine Nut (33) auf ihrem Dichtrand (22) umfaßt und daß sich die Dichtung in dieser Nut (33) befindet.

4. Vorrichtung gemäß einem der Ansprüche 1 bis 3, dadurch gekennzeichnet, daß nach dem Absenken des zylindrischen Endteils (19) des männlichen Steckteils (16) dieses Endteil sich im wesentlichen auf derselben Ebene befindet, wie dasjenige des Dichtrandes (22) des weiblichen Aufnahmeteils (17).

5. Vorrichtung gemäß Anspruch 1, dadurch gekennzeichnet, daß der weibliche Aufnahmeteil (17) einen zylindrischen Teil (20) aufweist, dessen Länge im wesentlichen der Dicke der Trägerplatte in der Nähe der Öffnung (2) entspricht und dessen Ende einen Teil (35), vorzugsweise abgerundet, gerichtet gegen das Innere dieses zylindrischen Teiles (20), umfaßt, wobie die Dichtung (18) gegen dieses Teil (35) nach dem Absenken des Endteils des zylindrischen Teils (19) des männlichen Steckteils (16) gedrückt ist.

6. Vorrichtung gemäß einem der vorhergehenden Ansprüche, dadurch gekennzeichnet, daß die Dichtränder (21 und 22) jedes Hülsenteils (16 und 17) einen Winkel alpha mit der Achse der betreffenden Hülse bildet, derart, daß bei der Montage der Vorrichtung in der Öffnung (2) einer Trägerplatte die Dichtränder (21 und 22), in dem sie die Membranen gegen die Trägerplatte pressen, sich in den elastischen Grenzen des verwendeten metallischen Materials deformieren, um die Hülsen (16 und 17) zu bilden.

7. Vorrichtung gemäß Anspruch 6, dadurch gekennzeichnet daß die Hülsen (16 und 17) aus rostfreiem Stahl sind und daß der Winkel alpha zwischen 3 und 6° beträgt.

## Claims

1. A device for the leaktight fixing of semipermeable membranes on each opposed face and around each orifice (2) for the passage of the fluid to be processed, of a membrane-support plate of an apparatus for separation by selective permeability, the said device comprising two rings, male (16) and female (17), having respectively a rim (21, 22) and a cylindrical part (19, 20), the said rims (21, 22) pressing the membranes (15) on the support plate in question, characterised in that the two pressed metal rings (16 and 17) are fixed together in a leaktight manner by folding back over a seal (18) of the end of the cylindrical part (19) of the male ring (16) when the device is mounted on a support plate.

2. A device according to Claim 1, characterised in that the female ring (17) comprises a cylindrical part (24) of greater diameter, connected directly to the rim (22) and positioned in a corresponding recess (25) of the support plate (1), the seal (18) being in this part (24).

3. A device according to Claim 1, characterised in that the female ring (17) comprises a groove (33) on its rim (22) and in that the seal is in this groove (22).

4. A device according to any one of Claims 1 to 3 characterised in that after folding back the cylindrical end (19) of the male ring (16), this end is substantially in the same plane as that of the rim (22) of the female ring (17).

5. A device according to Claim 1, characterised in that the female ring (17) has a cylindrical part (20) whose length corresponds substantially to the thickness of the support plate close to the orifice (2), and whose end comprises a part (35), preferably round, directed towards the inside of the said cylindrical part (20), the seal (18) being flattened against this part (35) after the folding back of the end of the cylindrical part (19) of the male ring (16).

6. A device according to any one of the preceding claims, characterised in that the rims (21 and 22) of each ring (16 and 17) form an angle $\alpha$ with the axis of the ring in question, so that during the mounting of the device in the orifice (2) of a support plate, the rims (21 and 22), whilst pressing the membranes against the support plate, are distorted within the elastic limits of the metal material employed to produce the rings (16 and 17).

7. A device according to Claim 6, characterised in that the rings (16 and 17) are of stainless steel and in that the angle $\alpha$ is between 3 and 6 degrees.

FIG.1

FIG.2

fig. 3a.

fig. 3b.

fig. 3

fig. 4

3

fig. 5

4

fig. 6